# EUROPEAN PATENT APPLICATION

(11) **EP 3 492 346 A1**
(43) Date of publication of application: **05.06.2019**
(21) Application number: 18207566.3
(22) Date of filing: 21.11.2018
(51) Int. Cl.: B62D 5/04

(54) **STEERING CONTROL UNIT**

(30) Priority: 22.11.2017 JP 2017225203
(71) Applicant: JTEKT CORPORATION, Osaka 542-8502 (JP)
(72) Inventor: ITAMOTO, Hidenori, Osaka-shi, Osaka 542-8502 (JP); KAGEYAMA, Takashi, Osaka-shi, Osaka 542-8502 (JP); HIBI, Toshie, Osaka-shi, Osaka 542-8502 (JP); TOMITA, Akihiro, Osaka-shi, Osaka 542-8502 (JP)
(74) Representative: Winter, Brandl, Fürniss, Hübner, Röss, Kaiser, Polte - Partnerschaft mbB

(57) **Abstract**

A steering control unit includes a microcomputer (51) that performs sensorless control of driving of a motor by using an estimated electrical angle (θmb) estimated by calculation. The microcomputer (51) has a first estimation calculation state and a second estimation calculation state. In the first estimation calculation state, the microcomputer (51) calculates the estimated electrical angle (θmb) from a value obtained by accumulating a first additional angle (Δθm1) calculated by a first additional angle calculation circuit (80) on the basis of a voltage (E) induced in the motor. In the second estimation calculation state, the microcomputer (51) calculates the estimated electrical angle (θmb) from a value obtained by accumulating a second additional angle (Aθm2) calculated by a second additional angle calculation circuit (81) that performs torque feedback control that causes steering torque (Trq) to follow a target torque value (Trq*). In a low steering velocity state, the microcomputer (51) calculates the estimated electrical angle (θmb) in the second estimation calculation state.

## Description

### BACKGROUND OF THE INVENTION

### 1. Field of the Invention

The invention relates to a steering control unit.

### 2. Description of Related Art

Japanese Patent Application Publication No. 2014-138530 (JP 2014-138530 A) discloses an electric power steering system that supplies motor torque as an assist force on the basis of a steering torque input to a vehicle steering mechanism. A steering control unit of the electric power steering system performs sensorless control of the driving of the motor by using an estimated electrical angle instead of an electrical angle based on a detection result from a rotation angle sensor that detects a rotation angle of the motor. The estimated electrical angle is estimated from a value that is obtained by accumulating an additional angle calculated on the basis of a voltage (a counter electromotive voltage) induced in the motor.

As described in JP 2014-138530 A, the magnitude of the induced voltage in the motor is proportional to the angular velocity of the motor that is the rate of change in the rotation angle of the motor. As the angular velocity of the motor becomes lower, i.e., as the rotational velocity of the motor becomes lower, the magnitude of the induced voltage becomes smaller. As the magnitude of the induced voltage becomes smaller, the accuracy in estimating the estimated electrical angle on the basis of the induced voltage in the motor becomes more susceptible to noise. For this reason, in the condition where the rotational velocity of the motor is low, the accuracy in estimating the estimated electrical angle is low, so that the estimated electrical angle tends to fluctuate. The condition where the rotational velocity of the motor is low indicates that a steering velocity is low. The steering velocity is the rate at which a steering wheel is operated by a driver to steer a vehicle. If the estimated electrical angle fluctuates greatly in such a low steering velocity state, a driver may feel drag, i.e., friction when performing the steering operation.

### SUMMARY OF THE INVENTION

A purpose of the invention is to provide a steering control unit for reducing friction that a driver feel when he or she performs steering operation in a low steering velocity state.

A steering control unit according to an aspect of the invention includes a control circuit that is configured to perform sensorless control of driving of a motor by using an estimated electrical angle estimated by calculation. The motor is a source of an assist force that is supplied to a steering mechanism on the basis of steering torque that is input to the steering mechanism to steer a steered wheel of a vehicle. The control circuit has a first estimation calculation state and a second estimation calculation state. In the first estimation calculation state, the control circuit calculates a first additional angle on the basis of a voltage induced in the motor and calculates the estimated electrical angle from a value obtained by accumulating the first additional angle. In the second estimation calculation state, the control circuit calculates a second additional angle by performing torque feedback control that causes the steering torque to follow a target torque value that is a target value for the steering torque required to be input to the steering mechanism, and the control circuit calculates the estimated electrical angle from a value obtained by accumulating the second additional angle. When the magnitude of the induced voltage falls within a range predetermined to indicate a low steering velocity state where the speed of steering operation performed by a driver is low, the control circuit calculates the estimated electrical angle in the second estimation calculation state.

It is noted that when the magnitude of the induced voltage in the motor falls within the predetermined range that indicates the low steering velocity state where the speed of steering operation performed by a driver is low, the induced voltage is small. When the magnitude of the induced voltage is small, accuracy in estimating the estimated electrical angle on the basis of the induced voltage is susceptible to noise. For this reason, in the low steering velocity state, the accuracy is low, so that the estimated electrical angle tends to fluctuate.

In this regard, according to the structure described above, in the low steering velocity state, the control circuit calculates the estimated electrical angle in the second estimation calculation state so that the estimated electrical angle is calculated on the basis of the steering torque instead of the induced voltage in the motor. In this case, one approach to calculating the additional angle may be to accumulate an additional amount uniquely assigned to the steering torque. However, the problem with this approach may be that when a driver keeps the steering torque unchanged, the additional amount also remains unchanged, so that the estimated electrical angle may fluctuate greatly.

In contrast to such an approach, according to the structure, in the second estimation calculation state, the additional amount to be added to the estimated electrical angle is calculated such that the steering torque approaches the target torque value. This makes it possible to vary the additional amount to be accumulated on the basis of the deviation between the steering torque and the target torque value and thus to more effectively reduce the fluctuations in the estimated electrical angle, for example, than when the additional amount uniquely assigned to the steering torque is accumulated as the additional angle. Thus, this reduces the fluctuations in the estimated electrical angle in the low steering velocity state, and in turn, reduces friction that a driver feels when he or she performs steering operation.

In the steering control unit according to the aspect, the control circuit may perform PID control as the torque feedback control. According to the structure, through the PID control, in particular, due to the effect of an integral term (I-term), the second additional angle is calculated such that the fluctuations in the estimated electrical angle are reduced. This allows adjustment of steering feel while reducing friction that a driver feels when he or she performs steering operation in the low steering velocity state. Further, through the PID control, in particular, the effect of a derivative term (D-term) allows adjustment of responsiveness, thus making it possible to adjust steering feel more flexibly.

In the steering control unit according to the aspect, when the magnitude of the induced voltage falls outside the predetermined range, the control circuit may determine that the accuracy in estimating the estimated electrical angle on the basis of the induced voltage is not low, and thus may calculate the estimated electrical angle in the first estimation calculation state.

According to the structure, when the magnitude of the induced voltage falls outside the predetermined range, the control circuit determines that the accuracy in estimating the estimated electrical angle is not low, i.e., determines that the accuracy is less susceptible to noise, and thus calculates the estimated electrical angle on the basis of the induced voltage in the motor (in the first estimation calculation state). That is, to improve steering feel during the sensorless control, in particular, in the low steering velocity state, the control circuit uses the steering torque and the target torque value to perform the sensorless control (in the second estimation calculation state). This achieves steering feel comparable to that provided by use of an electrical angle that is obtained on the basis of a detection result from a rotation angle sensor that detects a rotation angle of the motor.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a diagram schematically illustrating an electric power steering system;
FIG. 2 is a block diagram illustrating the electrical structure of the electric power steering system;
FIG. 3 is a block diagram illustrating the functions of a microcomputer of a steering control unit of the electric power steering system;
FIG. 4 is a block diagram illustrating the function of a rotation angle estimation circuit of the microcomputer; and
FIG. 5 is a block diagram illustrating the function of a second additional angle calculation circuit of the rotation angle estimation circuit.

### DETAILED DESCRIPTION OF EMBODIMENTS

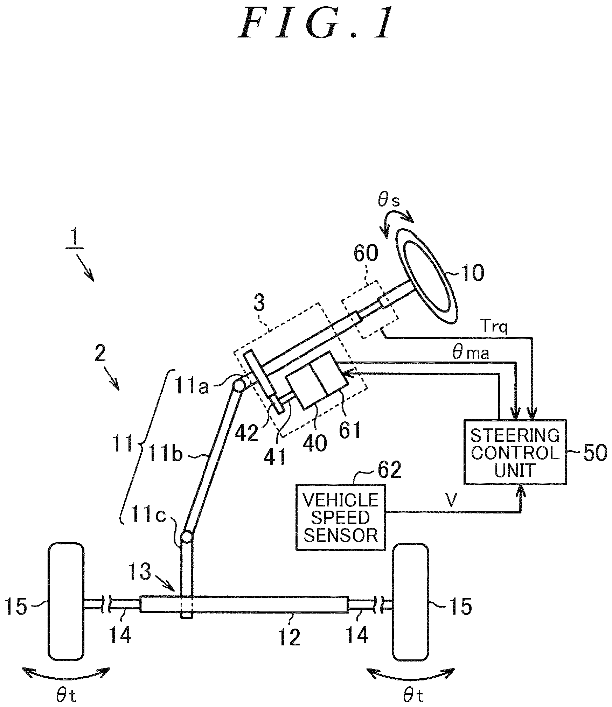

A steering control unit according to an embodiment of the invention is described below. As illustrated in FIG. 1, an electric power steering system 1 includes the following: a steering mechanism 2 that steers steered wheels 15 in accordance with steering operation that a driver performs to operate a steering wheel 10; and an assist mechanism 3 that assists a driver in performing the steering operation.

The steering mechanism 2 includes the steering wheel 10 and a steering shaft 11 that is fixed with respect to the steering wheel 10. The steering shaft 11 includes the following: a column shaft 11a coupled to the steering wheel 10; an intermediate shaft 11b coupled to the lower end of the column shaft 11a; and a pinion shaft 11c coupled to the lower end of the intermediate shaft 11b. The lower end of the pinion shaft 11c is coupled via a rack and pinion mechanism 13 to a rack shaft 12 as a steered shaft. The rack shaft 12 is supported by a rack housing (not illustrated). The right and left steered wheels 15 are respectively coupled to the right and left ends of the rack shaft 12 via tie rods 14. Thus, the rack and pinion mechanism 13, including the pinion shaft 11c and the rack shaft 12, converts rotary motion of the steering wheel 10, i.e., rotary motion of the steering shaft 11, to reciprocating linear motion of the rack shaft 12 in an axial direction (a lateral direction in FIG. 1). The reciprocating linear motion is transmitted to the steered wheels 15 via the tie rods 14 that are coupled to the respective ends of the rack shaft 12, and thus steered angles θt of the steered wheels 15 change.

The assist mechanism 3 includes a motor 40 that is a source of power (an assist force) to be supplied to the steering mechanism 2. For example, the motor 40 is a three-phase brushless motor and is rotated on the basis of three-phase (U, V, W) driving electric power. A rotating shaft 41 of the motor 40 is coupled to the column shaft 11a via a speed reduction mechanism 42. The assist mechanism 3 converts, through the speed reduction mechanism 42, the rotational force of the rotating shaft 41 of the motor 40 to a force that causes the rack shaft 12 to linearly reciprocate in the axial direction. This axial force applied to the rack shaft 12 serves as power (an assist force) to change the steered angles θt of the steered wheels 15.

As illustrated in FIG. 1, the motor 40 is connected to a steering control unit 50 that controls the driving of the motor 40. On the basis of detection results from various types of sensors, the steering control unit 50 controls a controlled variable for the motor 40, i.e., controls the supply of electric current to the motor 40, thereby controlling the driving of the motor 40. Examples of the sensors may include a torque sensor 60, a rotation angle sensor 61, and a vehicle speed sensor 62. The torque sensor 60 is provided to the column shaft 11a. The rotation angle sensor 61 is provided to the motor 40. The torque sensor 60 detects a steering torque Trq that is an operation state quantity generated at the steering shaft 11 and that changes in response to the steering operation performed by a driver. The rotation angle sensor 61 detects a rotation angle (an electrical angle) θma of the rotating shaft 41 of the motor 40. The vehicle speed sensor 62 detects a vehicle speed V that is the traveling speed of a vehicle.

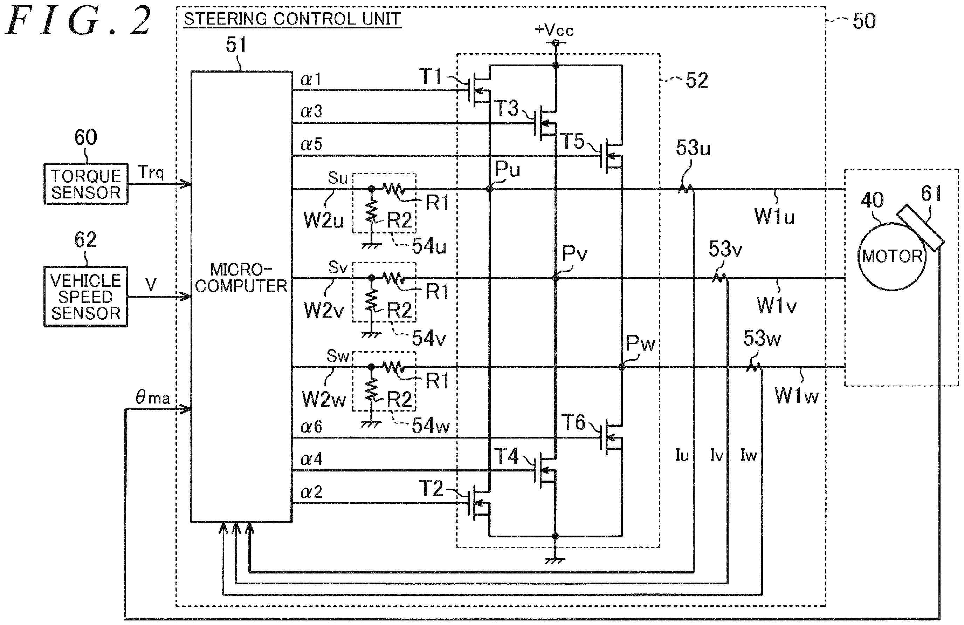

Next, the electrical structure of the electric power steering system 1 is described. As illustrated in FIG. 2, the steering control unit 50 includes the following: a microcomputer 51 that generates a motor control signal required to drive the motor 40; and a drive circuit 52 that supplies electric current to the motor 40 on the basis of the motor control signal. The microcomputer 51 receives the detection results from the torque sensor 60, the rotation angle sensor 61, and the vehicle speed sensor 62. The microcomputer 51 further receives phase current values Iu, Iv, and Iw of the motor 40. The phase current values Iu, Iv, and Iw are respectively detected by current sensors 53u, 53v, and 53w that are respectively provided to power supply lines W1u, W1v, and W1w that connect the drive circuit 52 and the motor 40. The microcomputer 51 further receives phase terminal voltage values Vu, Vv, and Vw of the motor 40. The phase terminal voltage values Vu, Vv, and Vw are respectively detected by voltage sensors 54u, 54v, and 54w that are respectively provided to signal lines W2u, W2v, and W2w that connect the microcomputer 51 and the drive circuit 52. More specifically, the microcomputer 51 receives detection signals Su, Sv, and Sw that are respectively output from the voltage sensors 54u, 54v, and 54w on the basis of the detected phase terminal voltage values Vu, Vv, and Vw. The microcomputer 51 generates and outputs pulse width modulation (PWM) drive signals α1 to α6, as the motor control signal, to the drive circuit 52 so as to drive the drive circuit 52 with pulse width modulation. According to the embodiment, the microcomputer 51 is an example of a control circuit.

The drive circuit 52 includes switching elements T1 to T6. The switching elements T1, T3, and T5 form upper arms for connecting a positive terminal of a direct current (DC) power source (with a power supply voltage +Vcc), such as an in-vehicle battery, to terminals of the motor 40. The switching elements T2, T4, and T6 form lower arms for connecting a negative terminal of the DC power source to the terminals of the motor 40. Thus, the drive circuit 52 includes three pairs of upper and lower arms: the switching elements T1 and T2; the switching elements T3 and T4; and the switching elements T5 and T6. A midpoint Pu between the switching elements T1 and T2 is connected to a U-phase coil of the motor 40 via the power supply line W1u. A midpoint Pv between the switching elements T3 and T4 is connected to a V-phase coil of the motor 40 via the power supply line W1v. A midpoint Pw between the switching elements T5 and T6 is connected to a W-phase coil of the motor 40 via the power supply line W1w. In the drive circuit 52, the switching elements T1 to T6 are switched on and off in accordance with the PWM drive signals α1 to α6 output from the microcomputer 51 so that a DC voltage supplied from the DC power source (with the power supply voltage +Vcc) is converted to three phase (U, V, and W phases) alternating-current (AC) voltages. The converted U, V, and W phase AC voltages are respectively supplied to the U, V, and W phase coils of the motor 40 through the power supply lines W1u, W1v, and W1w to drive the motor 40.

The voltage sensors 54u, 54v, and 54w are respectively connected to the midpoints Pu, Pv, and Pw of the switching elements T1 to T6. Each of the voltage sensors 54u, 54v, and 54w has resistors R1 and R2 that form a voltage divider to divide the corresponding detected phase terminal voltage. The voltage sensors 54u, 54v, and 54w respectively output, to the microcomputer 51 through the signal lines W2u, W2v, and W2w, the divided voltages as the detection signals Su, Sv, and Sw.

Next, the functions of the microcomputer 51 are described in detail. Although not illustrated in the drawings, the microcomputer 51 includes a central processing unit (CPU) and a memory device. The CPU repeatedly executes a program stored in the memory device with a predetermined control period, thereby controlling the driving of the motor 40.

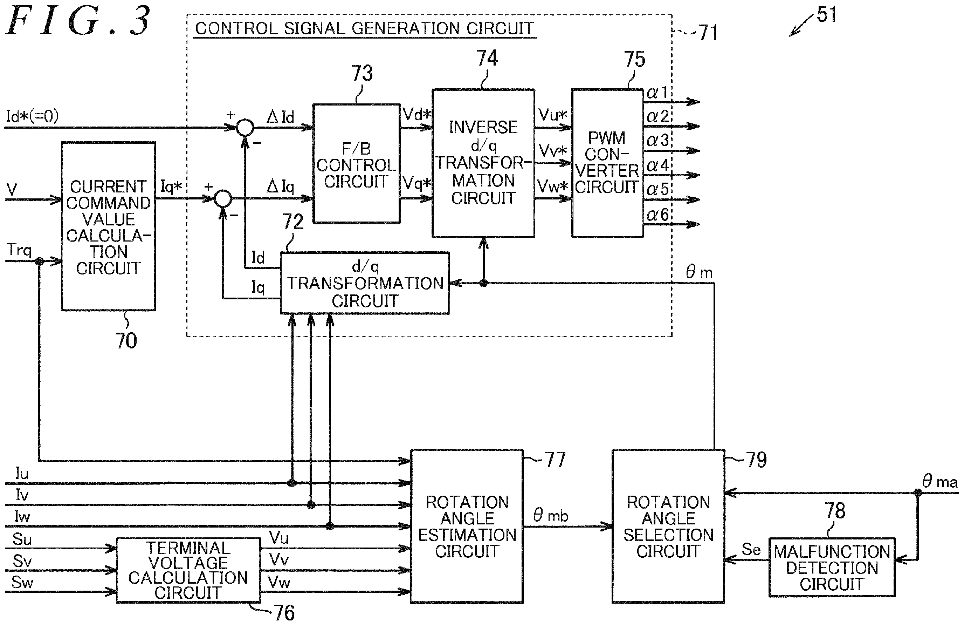

As illustrated in FIG. 3, the microcomputer 51 includes a current command value calculation circuit 70 and a control signal generation circuit 71. The current command value calculation circuit 70 calculates (generates) a current command value that is a target value for the amount of electric current corresponding to an assist force that the motor 40 needs to produce. The control signal generation circuit 71 generates the PWM drive signals α1 to α6 corresponding to the current command value.

The current command value calculation circuit 70 receives the vehicle speed V and the steering torque Trq. On the basis of the vehicle speed V and the steering torque Trq, the current command value calculation circuit 70 calculates and generates a q-axis current command value Iq* that is the current command value for a q-axis of a d/q coordinate system. The current command value calculation circuit 70 generates the q-axis current command value Iq* such that the absolute value of the q-axis current command value Iq* increases with an increase in the absolute value of the steering torque Trq and also increases with a decrease in the vehicle speed V. According to the embodiment, the microcomputer 51 fixes, to a zero value, a d-axis current command value Id* that is the current command value for a d-axis of the d/q coordinate system.

The control signal generation circuit 71 receives the following: the q-axis current command value Iq* generated by the current command value calculation circuit 70; the d-axis current command value Id* (a zero value); the phase current values Iu, Iv, and Iw; and an electrical angle θm (an electrical angle for control). On the basis of the phase current values Iu, Iv, and Iw and the electrical angle θm, the control signal generation circuit 71 performs current feedback control that causes the actual value of electric current through the motor 40 to follow the q-axis current command value Iq*, thereby generating and outputting the PWM drive signals α1 to α6 to the drive circuit 52. According to the embodiment, either the rotation angle (an electrical angle) θma detected by the rotation angle sensor 61 or an estimated electrical angle θmb calculated (generated) by a later-described rotation angle estimation circuit 77 is input as the electrical angle θm to the control signal generation circuit 71.

Specifically, the control signal generation circuit 71 includes a d/q transformation circuit 72, a feedback control circuit (hereinafter referred to as a F/B control circuit) 73, an inverse d/q transformation circuit 74, and a PWM converter circuit 75.

The F/B control circuit 73 receives a d-axis current deviation ΔId and a q-axis current deviation ΔIq. The d-axis and q-axis current deviations ΔId and ΔIq are respectively obtained by subtracting the d-axis and q-axis current values Id and Iq generated by the d/q transformation circuit 72, from the d-axis and q-axis current command values Id* and Iq* generated by the current command value calculation circuit 70. Further, the F/B control circuit 73 performs current feedback control based on the d-axis current deviation ΔId to cause the d-axis current value Id to follow the d-axis current command value Id*, thereby calculating and generating a d-axis voltage command value Vd*. Likewise, the F/B control circuit 73 performs current feedback control based on the q-axis current deviation ΔIq to cause the q-axis current value Iq to follow the q-axis current command value Iq*, thereby calculating and generating a q-axis voltage command value Vq*.

The inverse d/q transformation circuit 74 receives the d-axis and q-axis voltage command values Vd* and Vq* generated by the F/B control circuit 73, and the electrical angle θm. On the basis of the electrical angle θm, the inverse d/q transformation circuit 74 maps the d-axis and q-axis voltage command values Vd* and Vq* on a three-phase AC coordinate system, thereby calculating and generating phase voltage command values Vu*, Vv*, and Vw* in the three-phase AC coordinate system.

The PWM converter circuit 75 receives the phase voltage command values Vu*, Vv*, and Vw* generated by the inverse d/q transformation circuit 74. The PWM converter circuit 75 generates the PWM drive signals α1 to α6 by PWM conversion of the phase voltage command values Vu*, Vv*, and Vw*. The PWM drive signals α1 to α6 are respectively applied to gate terminals of the switching elements T1 to T6 of the drive circuit 52.

When a malfunction occurs that causes the rotation angle sensor 61 to fail to detect normal values, the microcomputer 51 performs sensorless control as backup control to continue to control the driving of the motor 40. The sensorless control uses the estimated electrical angle θmb estimated by calculation, instead of the rotation angle θma based on the detection result from the rotation angle sensor 61.

As illustrated in FIG. 3, the microcomputer 51 includes a terminal voltage calculation circuit 76, the rotation angle estimation circuit 77, a malfunction detection circuit 78, and a rotation angle selection circuit 79. The terminal voltage calculation circuit 76 receives the detection signals Su, Sv, and Sw from the voltage sensors 54u, 54v, and 54w. On the basis of the detection signals Su, Sv, and Sw, the terminal voltage calculation circuit 76 calculates and generates the phase terminal voltage values Vu, Vv, and Vw of the motor 40.

The rotation angle estimation circuit 77 receives the phase terminal voltage values Vu, Vv, and Vw generated by the terminal voltage calculation circuit 76, the steering torque Trq, and the phase current values Iu, Iv, and Iw. On the basis of the phase terminal voltage values Vu, Vv, and Vw, the steering torque Trq, and the phase current values Iu, Iv, and Iw, the rotation angle estimation circuit 77 calculates and generates the estimated electrical angle θmb.

The malfunction detection circuit 78 receives the rotation angle θma. On the basis of the rotation angle θma, the malfunction detection circuit 78 detects whether a malfunction occurs that causes the rotation angle sensor 61 to fail to detect normal values. Upon detection of the malfunction, the malfunction detection circuit 78 generates a malfunction detection signal Se indicating the occurrence of the malfunction. For example, the malfunction detection circuit 78 detects the malfunction when the absolute value of the difference between the present and previous values of the rotation angle θma falls outside a predetermined allowable range. The allowable range is set such that the malfunction is detectable, by taking into account the control period of the microcomputer 51 and sensor tolerances of the rotation angle sensor 61.

The rotation angle selection circuit 79 receives the estimated electrical angle θmb generated by the rotation angle estimation circuit 77, the malfunction detection signal Se generated by the malfunction detection circuit 78, and the rotation angle θma. When the malfunction detection signal Se is not input to the rotation angle selection circuit 79, i.e., when the rotation angle sensor 61 does not malfunction (i.e., functions normally), the rotation angle selection circuit 79 outputs the rotation angle θma, detected by the rotation angle sensor 61, as the electrical angle θm so that the rotation angle θma is used as an electrical angle for control. In this case, the control signal generation circuit 71 uses the rotation angle θma as the electrical angle θm to perform various calculations.

In contrast, when the malfunction detection signal Se is input to the rotation angle selection circuit 79, i.e., when the rotation angle sensor 61 malfunctions (i.e., does not function normally), the rotation angle selection circuit 79 outputs the estimated electrical angle θmb, generated by the rotation angle estimation circuit 77, as the electrical angle θm so that the estimated electrical angle θmb is used, instead of the rotation angle θma detected by the rotation angle sensor 61, as an electrical angle for control. In this case, the control signal generation circuit 71 uses the estimated electrical angle θmb as the electrical angle θm to perform various calculations.

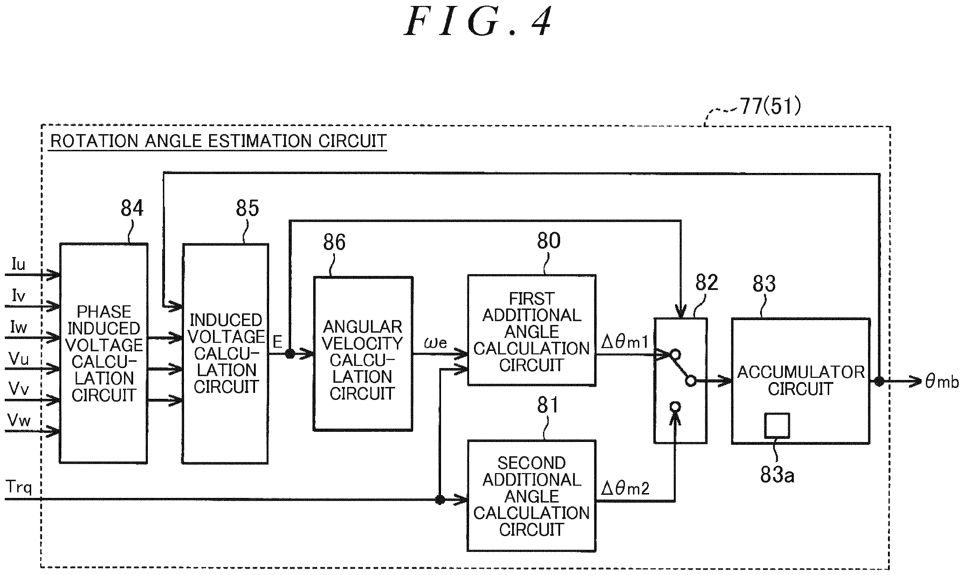

The function of the rotation angle estimation circuit 77 is described in more detail below. As illustrated in FIG. 4, the rotation angle estimation circuit 77 includes a first additional angle calculation circuit 80 and a second additional angle calculation circuit 81. The first additional angle calculation circuit 80 calculates a first additional angle Δθm1 that is used to calculate (estimate) the estimated electrical angle θmb on the basis of a voltage induced in the motor 40. The second additional angle calculation circuit 81 calculates a second additional angle Δθm2 that is used to calculate (estimate) the estimated electrical angle θmb on the basis of the steering torque Trq. The rotation angle estimation circuit 77 further includes a switch circuit 82 and an accumulator circuit 83. The switch circuit 82 selects which of the calculation results from the first and second additional angle calculation circuits 80 and 81 is used to calculate the estimated electrical angle θmb. The accumulator circuit 83 adds either the first additional angle Δθm1 or the second additional angle Δθm2 to the previous value of the estimated electrical angle θmb, thereby calculating (generating) the estimated electrical angle θmb.

First, how to calculate (generate) the induced voltage in the motor 40 is described. The rotation angle estimation circuit 77 includes a phase induced voltage calculation circuit 84. The phase induced voltage calculation circuit 84 receives the phase current values Iu, Iv, and Iw, and the phase terminal voltage values Vu, Vv, and Vw. On the basis of the phase current values Iu, Iv, and Iw, and the phase terminal voltage values Vu, Vv, and Vw, the phase induced voltage calculation circuit 84 calculates phase induced voltage values eu, ev, and ew in the three-phase AC coordinate system by taking into account their respective phase coil resistances.

The rotation angle estimation circuit 77 further includes an induced voltage calculation circuit 85. The induced voltage calculation circuit 85 receives the phase induced voltage values eu, ev, and ew generated by the phase induced voltage calculation circuit 84, and the previous value of the estimated electrical angle θmb calculated one control period before the present control period. On the basis of the previous value of the estimated electrical angle θmb, the induced voltage calculation circuit 85 converts the phase induced voltage values eu, ev, and ew to two phase induced voltage values ed and eq in the d/q coordinate system. The induced voltage calculation circuit 85 then calculates and generates an induced voltage value E (in absolute value) that is the square root of the sum of the squares of the two phase induced voltage values ed and eq.

The rotation angle estimation circuit 77 further includes an angular velocity calculation circuit 86. The angular velocity calculation circuit 86 receives the induced voltage value E generated by the induced voltage calculation circuit 85. On the basis of the induced voltage value E, the angular velocity calculation circuit 86 calculates and generates an estimated angular velocity ωe. The estimated angular velocity ωe is an estimated value of an angular velocity of the motor 40, i.e., an estimated value of a rotational velocity of the motor 40 that is the rate of change in the rotation angle θma of the motor 40. The induced voltage value E and the estimated angular velocity ωe are proportional to each other. The estimated angular velocity ωe is calculated by dividing the induced voltage value E by a predetermined induced voltage constant (a counter electromotive force constant). The rotation angle θma of the motor 40 has a correlation with a steering angle θs (refer to FIG. 1) that is a rotation angle of the steering wheel 10 (the steering shaft 11). Therefore, the angular velocity of the motor 40, i.e., the rotational velocity of the motor 40 has a correlation with a steering velocity ωs that is the rate of change in the steering angle θs of the steering wheel 10.

The first additional angle calculation circuit 80 receives the estimated angular velocity ωe generated by the angular velocity calculation circuit 86. On the basis of the estimated angular velocity ωe, the first additional angle calculation circuit 80 calculates and generates the first additional angle Δθm1 indicative of an additional amount to be added that is the amount of change in the estimated electrical angle θmb in one control period. According to the embodiment, the first additional angle calculation circuit 80 calculates the first additional angle Δθm1 by multiplying the estimated angular velocity ωe by the control period. More specifically, the first additional angle calculation circuit 80 also receives the steering torque Trq and sets the sign of the first additional angle Δθm1 to positive or negative (i.e., determines whether to add or subtract the first additional angle Δθm1) by considering that the sign (positive or negative) of the steering torque Trq corresponds to the rotation direction of the motor 40.

The second additional angle calculation circuit 81 receives the steering torque Trq. On the basis of the steering torque Trq, the second additional angle calculation circuit 81 calculates and generates the second additional angle Δθm2 indicative of an additional amount to be added that is the amount of change in the estimated electrical angle θmb in one control period. How the second additional angle calculation circuit 81 calculates the second additional angle Δθm2 is described in detail later. The second additional angle calculation circuit 81 sets the sign of the second additional angle Δθm2 to positive or negative (i.e., determines whether to add or subtract the second additional angle Δθm2) on the basis of the sign (positive or negative) of the steering torque Trq.

The switch circuit 82 receives the induced voltage value E generated by the induced voltage calculation circuit 85. If the induced voltage value E is greater than the threshold voltage value Eth (a positive value), the switch circuit 82 selects the first additional angle Δθm1 so that the first additional angle Δθm1 is added to the previous value of the estimated electrical angle θmb. In contrast, if the induced voltage value E is less than or equal to the threshold voltage value Eth, the switch circuit 82 selects the second additional angle Δθm2 so that the second additional angle Δθm2 is added to the previous value of the estimated electrical angle θmb.

According to the embodiment, the threshold voltage value Eth is set empirically such that whether the steering wheel 10 is in a low steering velocity state is determinable on the basis of the threshold voltage value Eth. The low steering velocity state is a state where the steering velocity ωs of the steering operation performed by a driver, corresponding to the estimated angular velocity ωe calculated on the basis of the induced voltage value E, is low. That is, the low steering velocity state is a state where the induced voltage value E falls within a predetermined range, i.e., less than or equal to the threshold voltage value Eth. In the low steering velocity state, it is expected that the induced voltage value E is small and the estimated electrical angle θmb is estimated with low accuracy on the basis of the induced voltage value E. On the other hand, a normal steering velocity state (a non-low steering velocity state) that is not the low steering velocity state is a state where the induced voltage value E falls outside the predetermined range, i.e., greater than the threshold voltage value Eth. In the normal steering velocity state, it is expected that the induced voltage value E is large and the estimated electrical angle θmb is estimated with high (not low) accuracy on the basis of the induced voltage value E.

The accumulator circuit 83 receives one of the first and second additional angles Δθm1 and Δθm2 that is selected by the switch circuit 82. The accumulator circuit 83 includes a memory circuit 83a that stores the previous value of the estimated electrical angle θmb calculated one control period before the present control period. The accumulator circuit 83 adds the additional angle selected by the switch circuit 82 to the previous value of the estimated electrical angle θmb stored in the memory circuit 83a, thereby calculating and generating the estimated electrical angle θmb.

While controlling the driving of the motor 40, the microcomputer 51 repeatedly generates the estimated electrical angle θmb with the control period so as to enable the sensorless control through the rotation angle estimation circuit 77 in the event of the malfunction of the rotation angle sensor 61. Specifically, in a condition that ensures that the estimated electrical angle θmb is estimated with high accuracy on the basis of the induced voltage value E, the microcomputer 51 calculates the estimated electrical angle θmb on the basis of the induced voltage value E. Thus, the microcomputer 51 has a first estimation calculation state where the estimated electrical angle θmb is calculated from a value that is obtained by accumulating the additional angle generated by the first additional angle calculation circuit 80.

In contrast, in a condition where the estimated electrical angle θmb is estimated with low accuracy on the basis of the induced voltage value E (i.e., in a condition that does not ensure that the estimated electrical angle θmb is estimated with high accuracy on the basis of the induced voltage value E), the microcomputer 51 calculates the estimated electrical angle θmb on the basis of the steering torque Trq, instead of the induced voltage value E. Thus, the microcomputer 51 has a second estimation calculation state where the estimated electrical angle θmb is calculated from a value that is obtained by accumulating the additional angle generated by the second additional angle calculation circuit 81. In this way, the microcomputer 51 switches between the first estimation calculation state and the second estimation calculation state when calculating the estimated electrical angle θmb.

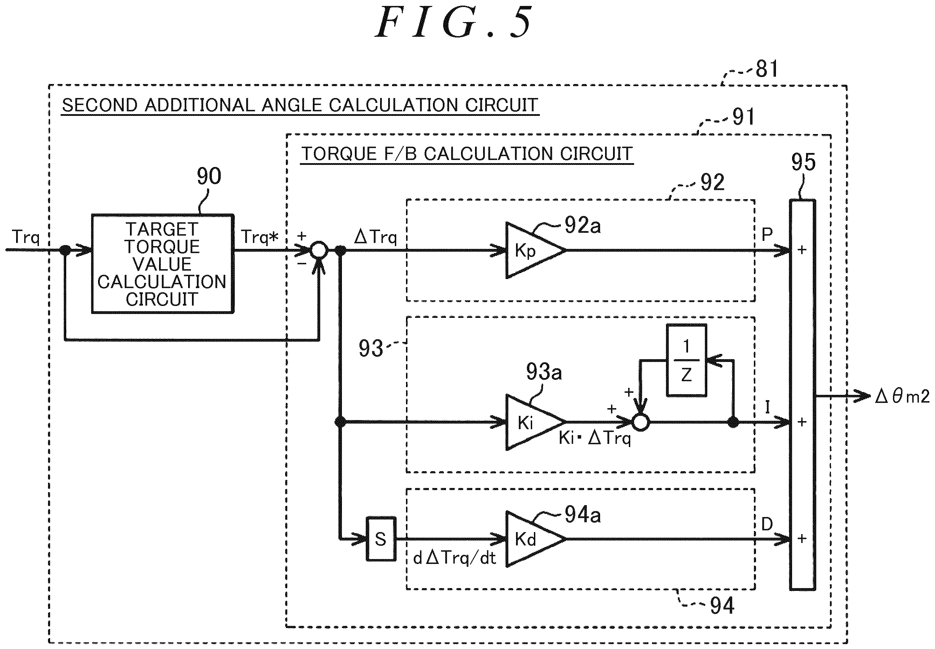

Next, the function of the second additional angle calculation circuit 81 is described in more detail. As illustrated in FIG. 5, the second additional angle calculation circuit 81 includes a target torque value calculation circuit 90 and a torque feedback calculation circuit (hereinafter referred to as a torque F/B calculation circuit) 91 that work in conjunction with each other to calculate and generate the second additional angle Δθm2 on the basis of the steering torque Trq.

The target torque value calculation circuit 90 receives the steering torque Trq. On the basis of the steering torque Trq, the target torque value calculation circuit 90 calculates and generates a target torque value Trp* that is a target value for the steering torque Trq required to be input to the steering mechanism 2. According to the embodiment, the target torque value calculation circuit 90 is configured such that the target torque value Trp* is set relative to the steering torque Trq to match at least one of the vehicle and the steering mechanism 2 of the vehicle so as to allow a driver to perform the steering operation smoothly. For example, a value greater or less than the steering torque Trq by a predetermined percent, or a predetermined fixed value (e.g., a zero value) may be set as the target torque value Trq* to match at least one of the vehicle and the steering mechanism 2 of the vehicle.

The torque F/B calculation circuit 91 receives a torque deviation ΔTrq that is obtained by subtracting the steering torque Trq from the target torque value Trq* generated by the target torque value calculation circuit 90. On the basis of the torque deviation ΔTrq, the torque F/B calculation circuit 91 performs torque feedback control that causes the steering torque Trq to follow the target torque value Trq*, thus calculating and generating the second additional angle Δθm2.

When receiving the torque deviation ΔTrq, the torque F/B calculation circuit 91 performs proportional-integral-derivative (PID) control, thus calculating and generating the second additional angle Δθm2.Specifically, the torque F/B calculation circuit 91 calculates the second additional angle Δθm2 by performing the torque feedback control on the basis of the torque deviation ΔTrq such that the steering torque Trq follows the target torque value Trq* to eliminate the torque deviation ΔTrq.

More specifically, the torque F/B calculation circuit 91 includes the following: a proportional term calculation circuit 92 for calculating (generating) a proportional term P (P-term); an integral term calculation circuit 93 for calculating (generating) an integral term I (I-term); a derivative term calculation circuit 94 for calculating (generating) a derivative term D (D-term); and an adder circuit 95 for adding together the proportional term P, the integral term I, and the derivative term D.

The proportional term calculation circuit 92 calculates and generates the proportional term P (= Kp·ΔTrq) by using a multiplier circuit 92a that multiplies the torque deviation ΔTrq by a proportional gain Kp. Thus, the proportional term calculation circuit 92 performs so-called proportional control. According to the embodiment, the proportional gain Kp is a value with a dimension for converting the dimension (newton meter (N·m)) of the torque deviation ΔTrq into the dimension of angle (degree).

The integral term calculation circuit 93 calculates and generates an integral element (Ki·ΔTrq) by using a multiplier circuit 93a that multiplies the torque deviation ΔTrq by an integral gain Ki. The integral term calculation circuit 93 calculates and generates the integral term I (= ∫(Ki·ΔTrq)) by accumulating the integral element. Thus, the integral term calculation circuit 93 performs so-called integral control. According to the embodiment, the integral gain Ki is a value with the same dimension as the proportional gain Kp.

The derivative term calculation circuit 94 calculates and generates the derivative term D (= Kd·d(ΔTrq)/dt) by using a multiplier circuit 94a that multiplies, by a derivative gain Kd, a derivative element (d(ΔTrq)/dt) obtained by differentiating the torque deviation ΔTrq with respect to time. Thus, the derivative term calculation circuit 94 performs so-called derivative control. According to the embodiment, the derivative gain Kd is a value with a dimension for converting the dimension (N·m/t) of the torque deviation ΔTrq differentiated with respect to time, into the dimension of angle (degree).

The adder circuit 95 adds together the proportional term P generated by the proportional term calculation circuit 92, the integral term I generated by the integral term calculation circuit 93, and the derivative term D generated by the derivative term calculation circuit 94, thereby generating the second additional angle Δθm2.The second additional angle Δθm2 is input to the switch circuit 82.

In conclusion, when the magnitude of the induced voltage value E falls within the predetermined range, specifically, when the magnitude of the induced voltage value E is less than or equal to the threshold voltage value Eth (i.e., in the low steering velocity state) during the sensorless control of the driving of the motor 40, the second additional angle calculation circuit 81 of the microcomputer 51 generates the second additional angle Δθm2 on the basis of the torque deviation ΔTrq repeatedly with the control period to vary the additional amount to be added to the estimated electrical angle θmb.
Actions and effects of the embodiment are described below. (1) For example, in the low steering velocity state, the induced voltage value E is small. As the induced voltage value E becomes smaller, the accuracy in estimating the estimated electrical angle θmb on the basis of the induced voltage value E becomes more susceptible to noise. For this reason, in the low steering velocity state, the estimated electrical angle θmb tends to fluctuate.

In this regard, according to the embodiment, in the low steering velocity state, the second additional angle calculation circuit 81 calculates the estimated electrical angle θmb so that the estimated electrical angle θmb is calculated on the basis of the steering torque Trq instead of the induced voltage value E. In this case, one approach to calculating the additional angle may be to accumulate an additional amount uniquely assigned to the steering torque Trq. However, the problem with this approach may be that when a driver keeps the steering torque Trq unchanged, the additional amount remains unchanged, so that the estimated electrical angle θmb may fluctuate greatly.

In this regard, according to the embodiment, the second additional angle calculation circuit 81 calculates the second additional angle Δθm2 such that the steering torque Trq approaches the target torque value Trq*. This makes it possible to vary the additional amount to be accumulated on the basis of the torque deviation ΔTrq between the steering torque Trq and the target torque value Trq* and thus to more effectively reduce the fluctuations in the estimated electrical angle θmb, for example, than when the additional amount uniquely assigned to the steering torque Trq is accumulated as the additional angle. Thus, this reduces the fluctuations in the estimated electrical angle θmb in the low steering velocity state, and in turn, reduces friction that a driver feels when he or she performs the steering operation.
(2) According to the embodiment, the microcomputer 51 performs PID control as the torque feedback control. Through the PID control, in particular, due to the effect of the integral term I, the second additional angle Δθm2 is calculated such that the fluctuations in the estimated electrical angle θmb are reduced. This allows adjustment of steering feel while reducing friction that a driver feels when he or she performs the steering operation in the low steering velocity state. Further, through the PID control, in particular, the effect of the derivative term D allows adjustment of responsiveness, thus making it possible to adjust steering feel more flexibly.
(3) According to the embodiment, in the normal steering velocity state (i.e., in the non-low steering velocity state), the microcomputer 51 calculates the estimated electrical angle θmb using the first additional angle calculation circuit 80. Specifically, in the normal steering velocity state, the microcomputer 51 determines that the accuracy in estimating the estimated electrical angle θmb on the basis of the induced voltage value E is not low, i.e., determines that the accuracy is less susceptible to noise, and thus calculates the estimated electrical angle θmb on the basis of the induced voltage value E (in the first estimation calculation state). That is, to improve steering feel during the sensorless control, in particular, in the low steering velocity state, the microcomputer 51 uses the steering torque Trq and the target torque value Trq* to perform the sensorless control (in the second estimation calculation state). This achieves steering feel comparable to that provided by use of an electrical angle that is obtained on the basis of the detection result from the rotation angle sensor 61.
(4) According to the embodiment, the driving of the motor 40 is normally controlled by using the rotation angle θma detected by the rotation angle sensor 61. When the rotation angle sensor 61 malfunctions, the sensorless control is performed to continue the supply of the assist force to the steering mechanism 2 while suppressing the degradation of steering feel.

The embodiment described above may be modified in various ways. Some examples of the modifications are described below. The microcomputer 51 may be configured to normally control the motor 40 only by performing the sensorless control that calculates the estimated electrical angle θmb on the basis of the induced voltage in the motor 40.

The target torque value calculation circuit 90 may calculate the target torque value Trq* without using the steering torque Trq, for example, when the target torque value Trq* is set to a fixed value (e.g., a zero value). The target torque value calculation circuit 90 may use the vehicle speed V to calculate the target torque value Trq*. If the vehicle is equipped with a steering angle sensor for detecting the steering angle θs changing with rotation of the steering wheel 10, the target torque value calculation circuit 90 may use the steering angle θs to calculate the target torque value Trq*. The target torque value calculation circuit 90 may use all or some of the steering torque Trq, the vehicle speed V, and the steering angle θs or may use other elements in addition to these elements, to calculate the target torque value Trq*.

If the phase terminal voltage values Vu, Vv, and Vw (the induced voltage value E) are not calculated (detected) correctly in the normal steering velocity state, the first estimation calculation state may be disabled so that the microcomputer 51 switches to the second estimation calculation state as in the low steering velocity state. If the second additional angle Δθm2 is not calculated correctly in the low steering velocity state, the second estimation calculation state may be disabled so that the microcomputer 51 switches to the first estimation calculation state.

The feedback control performed by the torque F/B calculation circuit 91 may use one or two of the proportional term P, the integral term I, and the derivative term D. For example, the torque F/B calculation circuit 91 may perform PI control using the proportional term P and the integral term I. As in the embodiment, the use of the integral term I is effective in reducing the fluctuations in the estimated electrical angle θmb.

The integral term calculation circuit 93 may calculate the integral term I by accumulating the torque deviation ΔTrq first and then by multiplying the accumulated result by the integral gain Ki. This structure has the same actions and effects as the embodiment.

The current command value calculation circuit 70 may use at least the steering torque Trq to calculate the q-axis current command value Iq*. That is, the current command value calculation circuit 70 may calculate the q-axis current command value Iq* without using the vehicle speed V. Alternatively, the q-axis current command value Iq* may be calculated using the steering torque Trq, the vehicle speed V, and other suitable elements.

In the embodiment, if the vehicle is equipped with a steering angle sensor that detects the steering angle θs changing with rotation of the steering wheel 10, the steering angle θs may be used as the rotation angle of the motor 40.

In the embodiment, the electric power steering system 1 is a column type in which an assist force is supplied to the column shaft 11a. Alternatively, the electric power steering system 1 may be a rack assist type in which an assist force is supplied to the rack shaft 12. When the electric power steering system 1 is the rack assist type, the torque sensor 60 may be provided, for example, to the pinion shaft 11c, or may be provided to the column shaft 11a in the same manner as described in the embodiment.

The modifications described above may be combined in various ways. For example, the modification where the electric power steering system 1 is the rack assist type may be combined with any of the other modifications.

## Claims

1. A steering control unit comprising:
a control circuit configured to perform sensorless control of driving of a motor by using an estimated electrical angle estimated by calculation, the motor being a source of an assist force that is supplied to a steering mechanism on the basis of steering torque that is input to the steering mechanism to steer a steered wheel of a vehicle, wherein
the control circuit has a first estimation calculation state and a second estimation calculation state,
in the first estimation calculation state, the control circuit calculates a first additional angle on the basis of a voltage induced in the motor and calculates the estimated electrical angle from a value obtained by accumulating the first additional angle,
in the second estimation calculation state, the control circuit calculates a second additional angle by performing torque feedback control that causes the steering torque to follow a target torque value that is a target value for the steering torque required to be input to the steering mechanism, the control circuit calculating the estimated electrical angle from a value obtained by accumulating the second additional angle, and
when a magnitude of the induced voltage falls within a range predetermined to indicate a low steering velocity state where a speed of steering operation performed by a driver is low, the control circuit calculates the estimated electrical angle in the second estimation calculation state.

2. The steering control unit according to claim 1, wherein
the control circuit performs PID control as the torque feedback control.

3. The steering control unit according to claim 1 or 2, wherein
when the magnitude of the induced voltage falls outside the predetermined range, the control circuit determines that accuracy in estimating the estimated electrical angle on the basis of the induced voltage is not low, and thus calculates the estimated electrical angle in the first estimation calculation state.

4. The steering control unit according to claim 1, wherein
the target torque value is set on the basis of and relative to the steering torque to match at least one of the vehicle and the steering mechanism of the vehicle so as to allow the driver to perform the steering operation smoothly.

5. The steering control unit according to claim 1, wherein
when a rotation angle sensor that detects a rotation angle of the motor does not malfunction, the control circuit controls the driving of the motor by using an electrical angle that is obtained on the basis of the rotation angle detected by the rotation angle sensor, and
when the rotation angle sensor malfunctions, the control circuit performs the sensorless control as backup control.
